# EUROPEAN PATENT APPLICATION

(11) **EP 1 788 333 A1**
(43) Date of publication of application: **23.05.2007**
(21) Application number: 05111036.9
(22) Date of filing: 21.11.2005
(51) Int. Cl.: F28D 1/04, F28D 1/053, F28D 7/10, F28F 1/02, F02B 29/04

(54) **Air cooling device**

(71) Applicant: Ford Global Technologies, LLC, Dearborn, MI 48126 (US)
(72) Inventor: Eriksson, Göran, 449 70, Nödinge (SE)
(74) Representative: Romare, Laila Anette

(57) **Abstract**

The invention relates to a heat exchanger for cooling a gaseous medium comprises at least one cooling conduit (36) for the gaseous medium and cooling conduits (37) for a liquid coolant, where a first and a second liquid header (26, 27) is mounted between the ends of the cooling conduits (36, 37) and a first and a second header (24, 25) for the gaseous medium. The cooling conduits (36) for the gaseous medium and the cooling conduits (37) for the liquid coolant comprises a single extruded profile, and that the profile comprises an inner conduit with one or more parallel channels (42) for the gaseous medium and an outer conduit with two or more adjacent channels (43) for the liquid medium, and that each end of the inner conduit (36) is arranged to pass through the first and second liquid headers (26, 27) into the first and second headers (24, 25) for gaseous medium. The invention further relates to a cooling conduit for use in the heat exchanger and a cooling system for supercharged air for a vehicle engine using such a heat exchanger.

## Description

### TECHNICAL FIELD

The present invention relates to an arrangement and a method for controlling the charging air flow of an internal combustion engine having an air intake manifold with an intake air pipe and an exhaust manifold and comprising a supercharger having a suction side and a discharge side, said intake air pipe

### BACKGROUND ART

Modern vehicles are often provided with a supercharged engine, allowing a higher power output per swept cylinder volume at the same engine speed. The supercharging of engines involves increasing the inlet pressure to the cylinders so as to obtain an improved charge to the cylinder and hence a higher effective pressure, resulting in an increase of power for the same speed, and this, by raising the inlet manifold pressure by means of a compressor. The compressors generally used may be turbocharger in which the rotary compressor is driven by a turbine using the engine exhaust gases, or alternatively a-compressors driven by the engine or an electric motor.

The compressing of the air or the mixture raises the temperature of the gas and results in a decrease in the quantity of air or mixture admitted to the engine and hence an increase of similar proportions in the developed output power of the engine. The increased temperature of the intake air will also increase the combustion temperature, which may increase the amount of nitrogen oxides, commonly termed NOx, in the exhaust gas.

US 4 785 788 discloses a system provided with a heat exchanger of an air/liquid type, a refrigerant circulating pump, a radiator for the transfer of heat between the air and the refrigerant liquid, which system is used to reduce the temperature of the intake air. In this system a gas/liquid heat exchanger provides a reduction in the temperature of the compressed air or gases by passing the gas which has to be cooled between multiple finned tubes through which the coolant water is circulating. The system is completed with the addition of a conventional air/water radiator for the dissipation into the atmosphere of the heat in the refrigerant coming from the first heat exchanger. A problem with this solution is that the profiling of some inner tubes is relatively complex and expensive to manufacture. As a result, the assembly of the profiled tubes and the radiator headers will also be complex.

The object of the invention is to provide an improved heat exchanger that avoids the above problems, allowing for a simplified manufacture of tubes and subsequent assembly of tubes and headers to produce a heat exchanger.

### DISCLOSURE OF INVENTION

The invention relates to a heat exchanger for cooling a gaseous medium, according to claim 1, a cooling conduit for a heat exchanger, according to claim 11, a cooling system for supercharged air for a vehicle engine, according to claim 19 and a vehicle provided with the heat exchanger, of claim 1, according to claim 20.

According to a first embodiment, the invention relates to a heat exchanger for cooling a gaseous medium, which heat exchanger comprises cooling conduits for the gaseous medium, said cooling conduits being connected at one end to a first header having an inlet connected to a source of compressed gaseous medium and at a second end to a second header having an outlet arranged to deliver cooled gaseous medium. The heat exchanger further comprises cooling conduits for a liquid coolant, said cooling conduits being connected at one end to a first liquid header having an inlet connected to a source of liquid coolant and a second end to a second liquid header having an outlet connected to a drain for liquid coolant, where the first and second liquid headers are mounted between the cooling conduits and the respective the first and second headers for the gaseous medium at either end of the cooling conduits.

The first and second liquid headers are arranged facing each other at either end of the cooling conduits and have facing surfaces provided with openings for receiving the ends of the conduits for liquid medium. In addition, the first and second liquid headers are provided with opposing surfaces having openings for receiving the ends of the cooling conduits for the gaseous medium, where the first and second headers for gaseous medium are mounted onto the said outer surfaces of the respective first and second liquid headers. Hence, the openings in said facing surfaces are preferably adapted to receive conduits for both liquid coolant and gaseous medium, while the openings in said opposing surfaces are preferably adapted to receive conduits for gaseous medium only.

The gaseous medium to be cooled may be air, as for a charge air cooler used for supercharged air to an engine, or a refrigerant, as for a condenser in an air conditioning unit.

Each cooling conduit may comprise an extruded profile, wherein the profile may comprise an inner conduit with one or more channels for the gaseous medium and an outer conduit with two or more parallel channels for the liquid medium. Each end of the inner conduit may be arranged to pass through the first and second liquid headers into the first and second headers for gaseous medium. Consequently, the heat transfer between the inlet gases and the water is obtained by means of a series of extruded, adjacent tubes, the water flowing through an inner set of tubes and the air through an outer set of tubes enveloping the former, there being separate manifolds at the inlet and outlet for each of the two mediums.

In order to allow the inner conduit to pass through the first and second liquid headers, while connecting the outer conduit to the first and second headers for gaseous medium, the outer conduit has been removed at each end of the profile, in order to expose the inner conduit over a predetermined distance. This may be achieved by milling or cutting away at least the outer wall of the outer conduit. In a preferred embodiment, the outer walls and any extruded ribs connecting the outer wall of the outer conduit to the outer wall of the inner conduit is removed over a distance substantially corresponding to the length of the inner conduit where it passes through adjacent walls of a liquid header.

Consequently, the respective ends of each outer conduit may be attached to the facing surfaces of the first and second liquid headers and the ends of each inner conduit may be attached to the opposing surfaces of the first and second liquid headers, respectively. The ends of the conduits may be attached by any suitable means, such as soldering in the case of metal conduits and headers.

According to one embodiment, the inner conduit may be provided with two or more channels placed side by side in substantially the same plane. The number of channels in the inner and outer conduits may be varied freely within the scope of the invention. In one alternative embodiment, the number of channels in the outer conduit may be at least twice the number of channels in the inner conduit. In this case, a single inner channel may be surrounded by two or more outer channels; two inner channels may be surrounded by four or more outer channels, and so on. The inner channels are preferably, but not necessarily placed in substantially the same plane. In another alternative embodiment, the number of outer channels may be less than twice the number of inner channels in the inner conduit. In this case, two inner channels may be surrounded by 2-3 outer channels; three inner channels may be surrounded by two or 3-5 outer channels, and so on. Because the cooling conduit is extruded the number of channels in the outer conduit may not be less than two, in order to maintain the structural stability of the cooling conduit. The use of multiple, separate channels within each conduit will result in an increased flow resistance and more turbulence, which in turn will give an increased heat transfer. The walls or ribs separating the individual inner and outer channels will also distribute and enhance the heat transfer from the inner to the outer conduit. An additional cooling effect may be provided by extruded cooling fins extending outwards from the outer wall of the inner conduit, into one or more of the outer channels, or extending inwards from the outer wall of the outer conduit, into one or more of the outer channels. Extruded cooling fins may also extend into the channels of the inner conduit, or be provided on the outer surface of the outer conduit to form a ribbed cooling conduit. The heat transfer may be increased further by adding corrugated sheet metal fins around and between the coolant conduits. The latter is common practice in heat exchangers and will not be described in further detail.

According to one embodiment, the heat exchanger may be connected to an outlet from a supercharger and an inlet for an air intake manifold of an engine, which heat exchanger may be arranged for cooling supercharged intake air.

According to an alternative embodiment, the heat exchanger may be a condenser connected to an outlet from a compressor and an inlet for an expander, which heat exchanger may be arranged for condensing a refrigerant in an air conditioning system.

The invention further relates to a cooling conduit for a heat exchanger as described above. As stated above, the cooling conduit may comprise an extruded profile, which profile may comprise an inner conduit with one or more channels for a gaseous medium and an outer conduit with two or more parallel channels for a liquid medium. Also, the inner conduit may be provided with two or more channels placed side by side in substantially the same plane and the number of channels in the outer conduit may be at least twice the number of channels in the inner conduit.

The inner conduit has an outer wall connected to an inner wall of the outer conduit by at least two webs extruded at the same time as the inner and outer conduits and their channels. The number of extruded webs may be equal to the number of channels in the outer conduit. In addition, extruded fins may extend part of the distance between the respective outer walls of the inner and outer conduits, which fins may extend from either of the said walls.

The inner and outer conduits form a substantially flat tube having a major and a minor axis, where the major axis coincides with the plane through the inner conduits. In addition, the cooling conduit may be arranged with its minor axis placed substantially at right angles to an air stream, such as a forced air stream through the front of a vehicle..

As stated above, the outer conduit has been removed at each end of the profile, in order to expose the inner conduit over a predetermined distance. Also, each end of the outer conduit may be arranged to be connected to a first header, and that each end of the inner conduit may be arranged to pass through the first header and extend into a second header.

The invention further relates to a cooling system for supercharged air for a vehicle engine, which system may comprise a supercharger arranged to supply an air intake manifold of the engine with air at a pressure above atmospheric pressure, a charge air cooler mounted between the super charger and the air intake manifold, and a heat exchanger for cooling water supplied to an removed from the charge air cooler, wherein the charge air cooler is a heat exchanger as described above. Finally, the invention relates to a vehicle provided with such a cooling system for supercharged air, which cooling system is provided with a heat exchanger as described above.

### BRIEF DESCRIPTION OF DRAWINGS

In the following text, the invention will be described in detail with reference to the attached drawings. These schematic drawings are used for illustration only and do not in any way limit the scope of the invention. In the drawings:
- Figure 1A: shows a schematic illustration of a charge air cooling system comprising a heat exchanger according to the invention;
- Figure 1B: shows a schematic illustration of an air conditioning system comprising a heat exchanger according to the invention;
- Figure 2: shows a charge air cooling system for an internal combustion engine;
- Figure 3: shows an enlarged view of one end of the heat exchanger of Figure 2;
- Figure 4: shows a perspective view of a liquid header as used in the embodiment of Figure 2;
- Figure 5: shows a perspective view of one end of a cooling conduit 35 according to the invention; and
- Figure 6: shows a cross-section through a cooling conduit according to the invention.

### EMBODIMENTS OF THE INVENTION

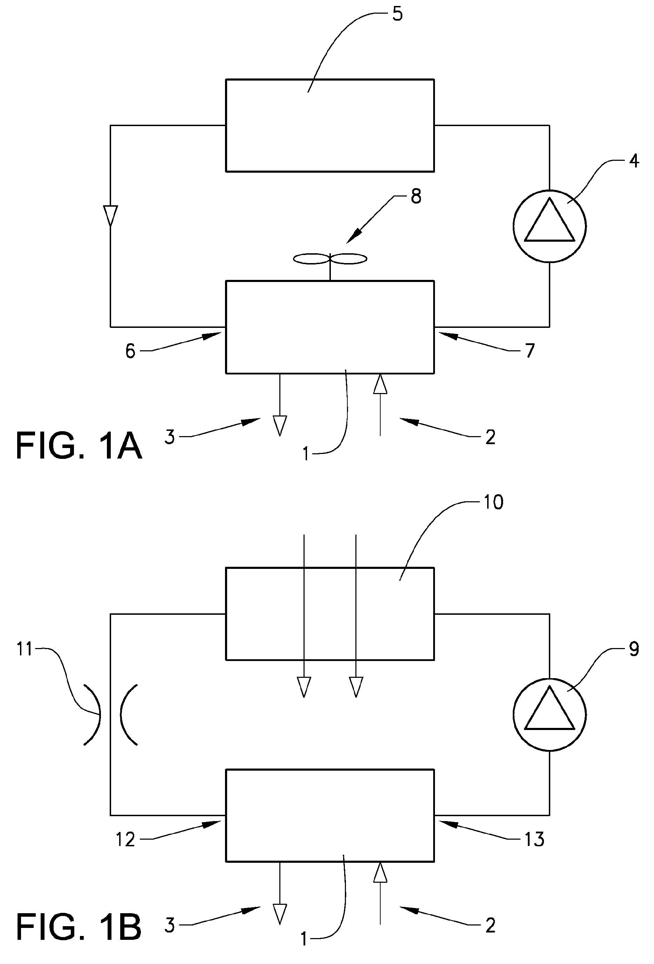

Figure 1A shows a schematic illustration of a cooling system for a gaseous medium comprising a heat exchanger according to the invention. The system comprises a heat exchanger 1 with an inlet 2 for a gaseous medium, such as air, connected to a source of pressurized gas, such as a supercharger or similar (not shown). The heat exchanger 1 has an outlet 3 for delivering cooled air to a consumer (not shown). The gaseous medium is cooled by a liquid medium, such as water, which liquid is circulated by a pump 4 that supplies the liquid to a further heat exchanger 5 where the liquid is cooled and supplied to an inlet 6 for liquid medium. When the gaseous medium has been cooled by the liquid medium, the liquid medium leaves the heat exchanger 1 through an outlet 7 and is returned to the pump 4. If additional cooling is required, the heat exchanger 1 can optionally be provided with a fan 8 that can be driven electrically, hydraulically or mechanically by an engine or similar.

Figure 1B shows a schematic illustration of an air conditioning system comprising a heat exchanger according to the invention. The system comprises a heat exchanger used as a condenser 1 with an inlet 2 for air connected to an intake for ambient air (not shown). The condenser 1 has an outlet 3 for delivering cooled air to an air delivery conduit (not shown), supplying cooled air to, for instance, a passenger compartment of a vehicle. The air is cooled by a suitable refrigerant, which refrigerant is circulated by a compressor 9 that supplies compressed refrigerant to an evaporator 10 where the refrigerant is evaporated into a gaseous state. The compressed, evaporated refrigerant is then passed through a throttle 11, causing a drop in temperature and pressure, and supplied to an inlet 12 in the condenser 1. When the gaseous medium has been cooled by the liquid medium, the liquid medium leaves the condenser 1 through an outlet 13 and is returned to the compressor 9.

Figures 1A and 1 B only describe two non-limiting examples of possible uses for a heat exchanger according to the invention.

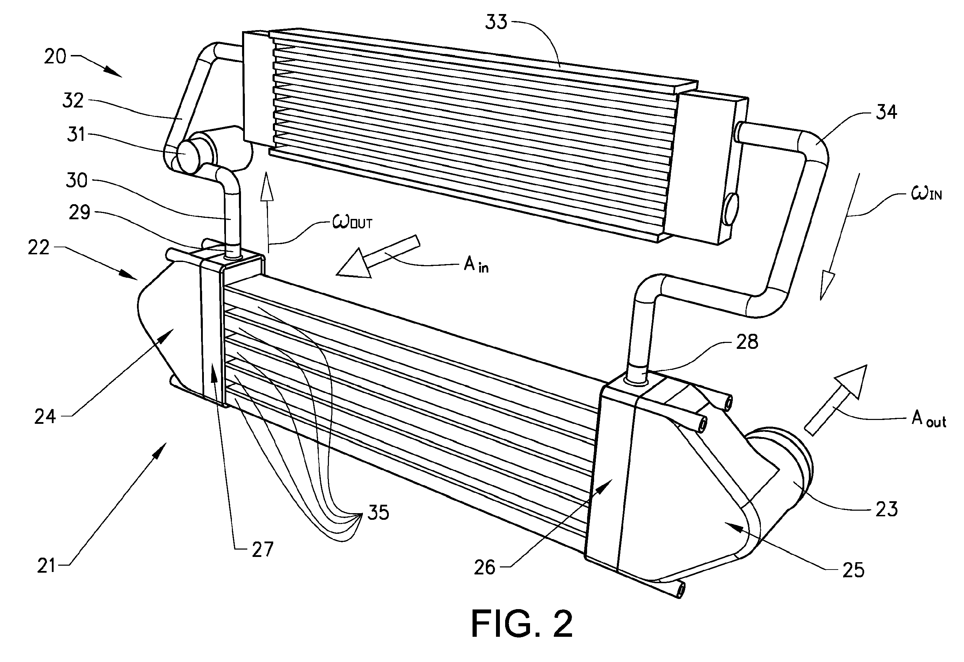

Figure 2 shows a charge air cooling system 20 for an internal combustion engine, which system is provided with a heat exchanger according to the invention. The charge air cooling system 20 comprises a first heat exchanger 21 having an inlet 22 for supercharged induction air, as indicated by the arrow A_{IN}, supplied by a supercharger (not shown). The supercharger can be a compressor or a turbocharger. The first heat exchanger 21 has an outlet 23 for delivering cooled induction air, as indicated by the arrow A_{OUT}, to an intake manifold of an internal combustion engine (not shown). The inlet 22 is part of a first header 24 for distributing the supercharged air into the heat exchanger 21, while the outlet 23 is part of a second header 25 for collecting cooled air. The first and second headers 24, 25 are mounted facing each other at either end of the first heat exchanger 21, whereby both facing sections of the headers 24, 25 are open over substantially their entire area. A substantially rectangular circumferential edge section of each header 24, 25 is arranged to cooperate with and seal against a mating section of a respective first and second liquid header 26, 27.

The first liquid header 26 has an inlet 28 connected to a source of cooling water and the second liquid header 27 has an outlet 29 connected to a drain for cooling water. Heated cooling water is drawn from the first liquid header 26 through a first conduit 30 by a water pump 31, as indicated by the arrow W_{OUT}. The water pump 31 pumps the heated cooling water to through a second conduit 32 into a conventional air-cooled, second heat exchanger 33, where the water is cooled to a desired temperature. The cooled water then flows through a third conduit 34 back to the first liquid header 26 of the heat exchanger 21, as indicated by the arrow W_{IN}. Each of the first and second liquid headers 26, 27 are mounted at either end of a number of cooling conduits 35, between the respective ends of the cooling conduits 35 and the respective the first and second headers 24, 25 for supercharged air.

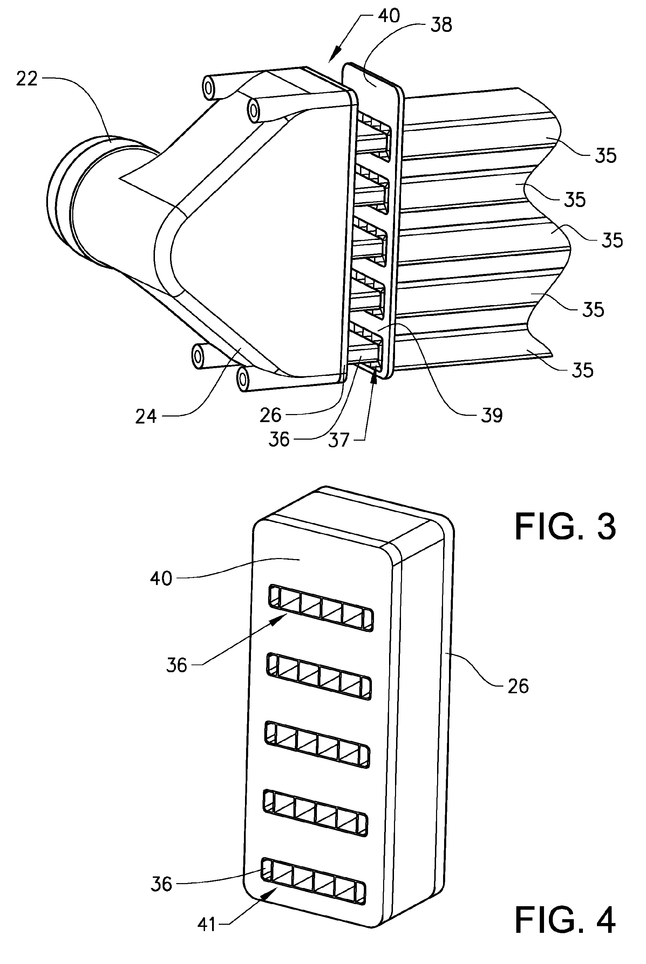

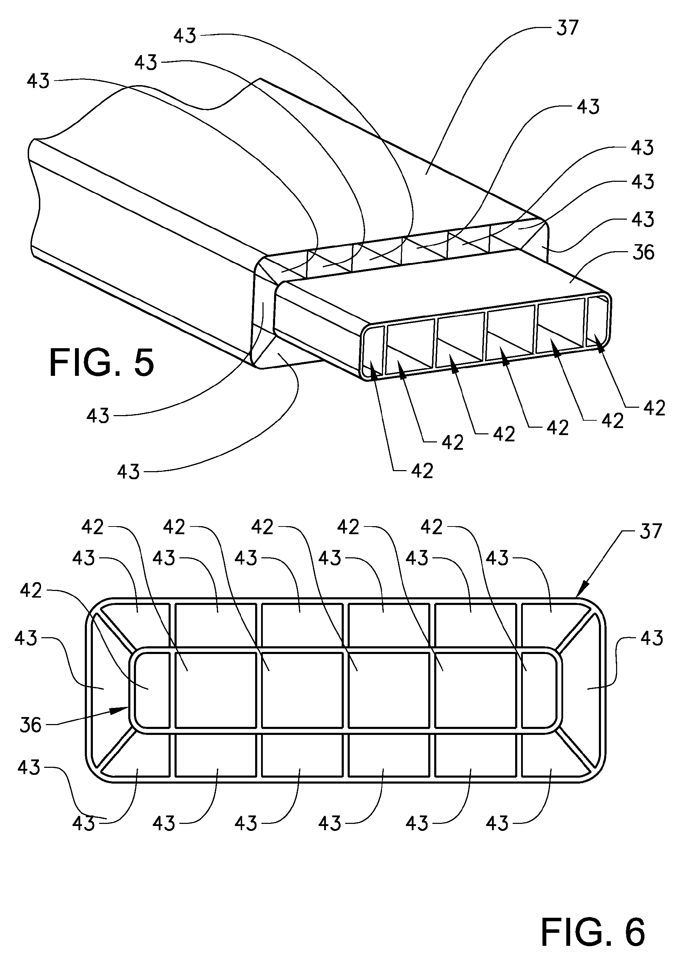

The first and second liquid headers 26, 27 are arranged facing each other at either end of a number of cooling conduits 35, wherein the facing, or inner end walls provided with openings for receiving the ends of the conduits for cooling water (see Fig.3). The embodiment of Figure 2 is provided with five parallel cooling conduits 35, placed in a natural of forced cooling air flow through the heat exchanger. The cooling air is supplied by ambient air flowing past the heat exchanger as the vehicle moves and/or be provided by a driven fan, as indicated in Figure 1A.. In addition, the first and second liquid headers 26, 27 are provided with opposing, or outer end walls having openings for receiving the ends of the cooling conduits for the supercharged air (see Fig.4), where the first and second headers for supercharged air are mounted onto the opposing end walls of the respective first and second liquid headers 26, 27. Hence, the openings in said facing end walls are preferably adapted to receive conduits for both cooling water and supercharged air, while the openings in said opposing end walls are preferably adapted to receive conduits for supercharged air only. This will be described in more detail in connection with Figures 3 and 4 below. The cooling effect of the cooling conduits 35 can be increased further by adding corrugated sheet metal fins around and between the cooling conduits 35 (indicated in dashed lines).

The embodiment of Figure 2 the heat exchanger 21 is arranged for counter flow, but the invention may of course also be arranged for parallel flow.

Figure 3 shows an enlarged, partially sectioned view of one end of the heat exchanger of Figure 2, wherein the outer side walls of the first liquid header has been cut away. As can be seen from Figure 3, each cooling conduit 35 comprises an inner and an outer conduit 36, 37. The inner conduit 36 passes through the first liquid header 26 into the first header 24 for supercharged air, while the outer conduit 37 is terminated at or just inside an end wall of the first liquid header 26. Figure 3 shows one of the opposing, inner end walls 38 of the first and second liquid headers 26, 27, which inner end wall 38 is provided openings 39 with a cross-sectional shape adapted for receiving the ends of the cooling conduits 35 for the supercharged air. The open end of the outer conduit 37 is attached to the outer surface of the inner end wall 38 of the first liquid header 26. Figure 3 also shows cooling conduits 35 with inner and outer conduits 36, 37 forming a substantially flat tube having a major and a minor axis, where the major axis coincides with the plane through the inner conduits. The major axes of the cooling conduits 35 are also placed substantially parallel to the main direction of the cooling air flow through the heat exchanger.

Figure 4 shows a perspective view of a liquid header as used in the embodiment of Figure 2. This figure shows one of the opposing, outer end walls 40 of the first and second liquid headers 26, 27. The outer end wall 40 of the first liquid header 26 is provided with openings 41 for receiving the ends of the inner conduit 36 for supercharged air. The open end of the inner conduit 36 is attached to the outer surface of the outer end wall 40 of the first liquid header 26.

In order to allow the inner conduit 36 to pass through the respective first and second liquid headers 26, 27, while connecting the outer conduit 37 to the first and second headers 24, 25 for supercharged air, the outer conduit 37 has been removed at each end of the cooling conduits 35 (only one end shown), in order to expose the inner conduit 36 over a predetermined distance. This is achieved by milling or cutting away at least the outer wall of the outer conduit. In this embodiment, the outer conduit has been removed over a distance equal to the distance between the outer surfaces of the inner and outer end walls 38, 40 of a liquid header 26. The exposed ends of the inner and outer conduits 36, 37 can then be inserted a short distance into their respective header. This allows the end of the outer conduit 37 to be fixed to the inner end wall 38 and the end of the inner conduit 36 to be fixed to the outer end wall 40.

In this embodiment, the cooling conduits and the headers are made from aluminium and may be attached to the respective end walls 38, 40 by soldering. The means of attachment is of course chosen dependent on the materials used in the component parts.

Figure 5 shows a perspective view of one end of a cooling conduit 35 according to the invention. As can be seen from this figure, the inner conduit 36 comprises a number of parallel inner channels 42 of substantially rectangular cross-section and placed adjacent each other in a single plane. Similarly, the outer conduit 37 comprises a number of outer channels 43, where most of the channels have a substantially rectangular cross-section.

The outer channels 43 in the outer conduit 37 are placed adjacent each other to completely surround the inner conduit 36 In this embodiment, the outer wall of the outer conduit 37 and all extruded walls or ribs separating the outer channels 43 and connecting the outer wall of the outer conduit 37 to the outer wall of the inner conduit 36 are removed by milling over a distance substantially corresponding to distance between the inner and outer end surfaces 38, 40 of the liquid header 26 (see Figs.3 and 4).

Figure 6 shows a cross-section through a cooling conduit according to the invention. According to this embodiment, the inner conduit 36 is provided with six channels 42 placed side by side in substantially the same plane. The number of outer channels 43 in the outer conduit 37 can be varied freely within the scope of the invention. In this case the outer conduit 37 has fourteen channels 43. The dimensions of the inner and outer channels 42, 43 and the thickness of the extruded walls that separate the channels and forms outer walls of the respective conduit 36, 37 is selected depending on factors such as the desired heat transfer between the inner and outer conduits and/or the outer conduit and the atmosphere, the required mass flow of air through the inner conduit and mass flow of cooling water through the outer conduit. The number of cooling conduits 35 can also be varied depending on the cooling requirements of the heat exchanger. The presence of external cooling fins surrounding the outer conduit will also have an effect on the dimensioning of the various parts of the cooling conduit 35

The invention is not limited to the above embodiments, but may be varied freely within the scope of the claims. For instance, although the above example is mainly directed to a cooling system for supercharged air in a vehicle, the heat exchanger is equally suitable for use as a condenser in an air conditioning system for vehicles, as indicated in Figure 1 B.

## Claims

1. Heat exchanger for cooling a gaseous medium, which heat exchanger comprises at least one cooling conduit (36) for the gaseous medium, said cooling conduit (36) being connected at one end to a first header (24) having an inlet (22) connected to a source of compressed gaseous medium and at a second end to a second header (25) having an outlet (23) arranged to deliver cooled gaseous medium, and further comprises cooling conduits (37) for a liquid coolant, said cooling conduits being connected at one end to a first liquid header (26) having an inlet (28) connected to a source of liquid coolant and at a second end to a second liquid header (27) having an outlet (29) for draining liquid coolant, where each of the first and second liquid headers (26, 27) are mounted between the cooling conduits (36, 37) and the respective the first and second headers (24, 25) for the gaseous medium, and where facing end walls (38) on the first and second liquid headers (26, 27) are provided with openings for receiving the ends of the conduits (37) for liquid medium, and opposing end walls (40) on the first and second liquid headers (26, 27) are provided with openings for receiving the ends of the cooling conduits (36) for the gaseous medium and where the first and second headers (24, 25) for gaseous medium are connected to the respective opposing end walls (40) of the first and second liquid headers (26, 27), **characterized in that** the cooling conduits (36) for the gaseous medium and the cooling conduits (37) for the liquid coolant comprises a single extruded profile, and that the profile comprises an inner conduit with one or more parallel channels (42) for the gaseous medium and an outer conduit with two or more adjacent channels (43) for the liquid medium, and that each end of the inner conduit (36) is arranged to pass through the first and second liquid headers (26, 27) into the first and second headers (24, 25) for gaseous medium.

2. Heat exchanger according to claim 1, **characterized in that** the outer conduit has been removed at each end of the profile, in order to expose the inner conduit over a predetermined distance.

3. Heat exchanger according to claim 2, **characterized in that** the ends of each outer conduit are attached to the facing surfaces of the first and second liquid headers and the ends of each inner conduit are attached to the opposing surfaces of the first and second liquid headers.

4. Heat exchanger according to claim 2, **characterized in that** the outer conduit has been removed over a distance equal to or less than the distance between the inner and outer surfaces of the liquid headers.

5. Heat exchanger according to claim 3, **characterized in that** the ends of the conduits are attached by soldering.

6. Heat exchanger according to claim 1, **characterized in that** the inner conduit is provided with two or more channels placed side by side in substantially the same plane.

7. Heat exchanger according to claim 6, **characterized in that** the number of channels in the outer conduit is at least twice the number of channels in the inner conduit.

8. Heat exchanger according to claim 1, **characterized in that** the gaseous medium and the liquid coolant are arranged to flow in opposite directions.

9. Heat exchanger according to claim 1, **characterized in that** the heat exchanger is connected to an outlet from a supercharger and an inlet for an air intake manifold of an engine, which heat exchanger is arranged for cooling supercharged intake air.

10. Heat exchanger according to claim 1, **characterized in that** the heat exchanger is a condenser connected to an outlet from a compressor and an inlet for an expander, which heat exchanger is arranged for condensing a refrigerant in an air conditioning system.

11. Cooling conduit for a heat exchanger according to claim 1, **characterized in that** the cooling conduit comprises an extruded profile, and that the profile comprises an inner conduit with one or more channels for a gaseous medium and an enclosing outer conduit with two or more parallel channels for a liquid medium.

12. Cooling conduit according to claim 11, **characterized in that** the inner conduit is provided with two or more channels placed side by side in substantially the same plane.

13. Cooling conduit according to claim 12, **characterized in that** the number of channels in the outer conduit is at least twice the number of channels in the inner conduit.

14. Cooling conduit according to claim 11, **characterized in that** the inner conduit has an outer wall connected to an inner wall of the outer conduit by at least two extruded webs.

15. Cooling conduit according to claim 12, **characterized in that** the inner and outer conduits form a substantially flat tube having a major and a minor axis, where the major axis coincides with the plane through the inner conduits.

16. Cooling conduit according to claim 15, **characterized in that** the cooling conduit is arranged with its minor axis placed substantially at right angles to a cooling air stream.

17. Cooling conduit according to claim 11, **characterized in that** the outer conduit has been removed at each end of the profile, in order to expose the inner conduit over a predetermined distance.

18. Cooling conduit according to claim 12, **characterized in that** each end of the outer conduit is arranged to be connected to a first header , and that each end of the inner conduit is arranged to pass through the first header and extend into a second header.

19. Cooling system for supercharged air for a vehicle engine, which system comprises a supercharger arranged to supply an air intake manifold of the engine with air at a pressure above atmospheric pressure, a charge air cooler mounted between the super charger and the air intake manifold, and a heat exchanger for cooling water supplied to an removed from the charge air cooler, **characterized in that** the charge air cooler is a heat exchanger according to claim 1.

20. Vehicle provided with a cooling system for supercharged air according to claim 11, which cooling system is provided with a heat exchanger according to claim 1.
